# EUROPÄISCHE PATENTANMELDUNG

(11) **EP 1 241 442 A2**
(43) Veröffentlichungstag der Anmeldung: **18.09.2002**
(21) Anmeldenummer: 02005622.2
(22) Anmeldetag: 12.03.2002
(51) Int. Cl.: G01C 11/04, G01B 11/00, G01B 11/02

(54) **Verfahren zur Bestimmung der Lage von Messbildern eines Objektes relativ zum Objekt**

(30) Priorität: 14.03.2001 DE 10112732
(71) Anmelder: Boochs, Frank, 64579 Gernsheim (DE); Twardochlip, Marek, 55122 Mainz (DE)
(72) Erfinder: Boochs, Frank, Prof. Dr.-Ing., 64579 Gernsheim (DE); Twardochlip, Marek, 55122 Mainz (DE); Garnica, Carsten, 71409 Schwaikheim (DE)
(74) Vertreter: Dr. Weitzel & Partner

(57) **Zusammenfassung**

Die Erfindung betrifft ein Verfahren zur Bestimmung der Lage von Meßbildern eines Objektes relativ zum Objekt, umfassend folgende Schritte:
- es werden in einem oder mehreren Meßbildern am Objekt angebrachte Referenzelemente identifiziert und gegenüber anderen Bildinhalten abgegrenzt
- die Referenzelemente werden am Objekt lokalisiert
- unter Verwendung der idenfizierten und lokalisierten Referenzelemente wird die Lage der Meßbilder relativ zum Objekt bestimmt.

Die Erfindung ist dadurch gekennzeichnet, daß
- die Referenzelement dreidimensionale Referenzelement sind.

## Beschreibung

Die Erfindung betrifft ein Verfahren zur Bestimmung der Lage von Meßbildern eines Objektes relativ zum Objekt sowie ein Verfahren zum photogrammetrischen Vermessen von Objekten auf der Basis von metrischen Meßbildern.

Mit Hilfe der Photogrammetrie können Objekte auf Basis von metrischen Meßbildern vermessen werden. Die benötigten Meßbilder liefern geeignete Meßkameras. Mit Hilfe von Auswerteverfahren werden rechnergestützt oder gänzlich digital aus den Bildern geometrische Informationen zu charakteristischen Details - i.a. Koordinaten von Objektpunkten - abgeleitet. Anhand der so gewonnenen Objektinformation wird das Objekt in seiner geometrischen Form beschrieben.

Voraussetzung für die Bestimmung von räumlichen Koordinaten aus Meßbildern ist die Existenz von mindestens zwei Meßbildern unterschiedlicher Perspektiven und die Kenntnis der gegenseitigen räumlichen Beziehung der Meßbilder. Häufig wird anstelle der gegenseitigen Beziehung, die Raumlage und Position der Meßbilder, d.h. ihre Orientierung mit Bezug auf ein übergeordnetes Koordinatensystem angegeben. Liegt nur ein einzelnes Meßbild vor, so ist eine zweidimensionale Auswertung möglich, sobald die Orientierung dieses Bildes gegenüber dem Objekt bekannt ist und das Objekt durch eine oder mehrere Ebenen approximiert werden kann.

Die Orientierung der Meßbilder setzt, wenn sie nicht durch konstruktive Maßnahmen vorgegeben ist, die Messung von gemeinsamen und /oder bekannten Informationen voraus. Hierzu bedient man sich entweder eindeutig identifizierbarer Abbildungen beliebiger, im Objektraum vorhandener und in die zu orientierenden Bilder projizierten Verknüpfungspunkte oder vergleichbar abgebildeter Referenzpunkte. Letztere unterscheiden sich von rein verknüpfenden Punkten durch die Kenntnis der 3D-Koordinaten im übergeordneten Koordinatensystem.

Wichtigste Forderung an die zu identifizierenden Punkte ist, daß sie klar und eindeutig erkennbar sein müssen. Deshalb werden in vielen Anwendungen Punktsignale im Objektraum angebracht, die diese Voraussetzung erfüllen können. Üblicherweise werden hierfür flächenhafte Signale, beispielsweise kreis-, kreuz- oder sternförmige Symbole, verwendet. Die Gestaltung dieser Zielmarken gewährleistet, daß die Signale eindeutig erkannt werden können und durch den meist symmetrischen Aufbau ein klar definiertes Zentrum besitzen, das zur Festlegung des Zielstrahls zu diesem Signalpunkt dient.

Betreffend photogrammetrische Meßverfahren wird auf die nachfolgenden Schriften verwiesen, deren Offenbarungsgehalt vollumfänglich in die vorliegende Anmeldung mitaufgenommen wird:
GB-A-1603936, JP-A-6281458, US 5642293, DE 4205406, DE 19746639 sowie DE 19735175

Aus der US 5642293 ist ein Verfahren und die dazu notwendige Technik für die Bestimmung von Deformationen an kleineren Körpern bekanntgeworden. Die Deformationen werden über ein aufprojiziertes oder aufgeprägtes Gitter sichtbar gemacht. Gemäß der US 5642293 wird das Gitter durch mindestens zwei Meßbilder mittels Methoden der Bildverarbeitung aufgespürt und aus den gefundenen Gitterpunkten die Objektpunkte und damit die Deformation berechnet. Die geometrisch korrekte Bestimmung der Oberfläche setzt voraus, daß die Orientierung der beiden Meßbilder ebenso bekannt ist wie die Geometrie der aufnehmenden Kamera. Diese Daten werden mit Hilfe eines einzelnen Paßkörpers, der gemäß der US 5642293 ein dreidimensionaler Paßkörper ist, ermittelt. Der Paßkörper trägt ebenfalls ein Gitter und zusätzlich einige Markierungen innerhalb der Gitterfelder, die eine Unterscheidung der Körperseiten erlauben. Diese dem Körper aufgeprägten Gitter werden genauso wie das dem Objekt aufgeprägte Gitter mit Mitteln der Bildverarbeitung lokalisiert. Aus den gefundenen Gitterpunkten und der bekannten Größe des Würfels werden Kantengeometrie und -orientierung berechnet.

Nachteilig an dem aus der US 5642293 bekannten Verfahren ist, daß das Objekt, das vermessen wird, in etwa die gleiche Größe wie der Paßkörper besitzt und direkt neben oder auf dem Objekt angeordent sein muß. Da der Paßkörper gemäß der US 5642293 vergleichbar mit einem einheitlichen Paßpunktrahmen ist, der alle notwendigen Geometrieinformationen über den Objektraum enthält, ist es vorteilhaft, als Paßkörper einen Würfel zu wählen, der in kompakter Weise mehrere Paßpunkte aufnehmen kann. Die Würfel gemäß der US 5642293 stellen somit keine Targets im Sinne der Erfindung dar.

Die DE 4205406 zeigt ein Verfahren zur Photogrammetrischen Vermessung eines statischen Objektes mit weitgehend handelsüblichen Video- oder CCD-Kameras, wobei mehrfarbige Meßmarken mit einer flächenhaft definierten Beschaffenheit nach den Grundfarbtönen verwendet werden.

Aus der DE 19735175 ist ein Verfahren zur digitalen Erfassung räumlicher Szenen sowie zur Bestimmung von Objektkoordinaten bekanntgeworden, bei dem die Verknüpfungselemente zwischen zwei Bildern, Bildelemente sind, die sich dadurch auszeichnen, daß sie in mindestens zwei Bildern vorhanden sind und deutlich von der Umgebung abheben. Dies können Punkte, Linien, Linienzüge etc. sein.
Die DE 19746639 zeigt ein Verfahren zur digitalen Erfassung räumlicher Objekte und Szenen für eine 3D-Bildkarte. Gemäß der DE 19746639 können synthetische, graphische 3D-Objekte in eine Ebene eingeblendet werden, jedoch handelt es sich hierbei um keine Targets, die dazu dienen Verknüpfungen aufzubauen, sondern um Objekte, die in ein bestehendes Modell eingeblendet werden.

Aus der GB A 1603936 ist ein photogrammetrisches Meßverfahren bekanntgeworden, bei dem mit Hilfe von zweidimensionalen Markierungen ein photogrammetrischer Plot eines Objektes mit herkömmlichen Kameras erstellt wird.

Die JP A 6281458 beschreibt ein Erkennungsverfahren für einen kubischen Körper mit Hilfe von zwei an unterschiedlichen Positionen aufgenommenen Bildern, wobei mit Hilfe eines Korrelationsfensters das erste Bild mit dem zweiten Bild zur Deckung gebracht wird und so der dreidimensionale Körper reflektiert wird.

Spezielle Referenzelemente für die Photogrammetrie sind in den nachfolgenden Schriften, deren Offenbarungsgehalt vollumfänglich in die vorliegende Anmeldung mitaufgenommen wird, beschrieben:
DE 19728513, DE 4409198, DE 19733466, JP A 10185563, JP A 11160069

Die DE 4409198 zeigt eine zweidimensionale Markierungseinrichtung, die ein Bild zur Markierung eines Anlagenteils aufweist. Das Bild zeigt einen maschinenlesbaren Code. Das Bild weist einen äußeren, eckigen Rahmen auf, der einen inneren, eckigen Rahmen umschließt. Die Farbe des inneren Rahmens unterscheidet sich kontrastreich von der Farbe des äußeren Rahmens.

Aus der DE 19728513 ist eine zweidimensionale Meßmarke bekannt geworden, die Meßmerkmale und Orientierungsmerkmale sowie Kodiermerkmale aufweist, wobei die Meßmerkmale, Orientierungsmerkmale und Kodiermerkmale relativ zueinander in einer festen, geometrischen Relation angeordnet sind.

Die DE 19733466 zeigt eine weitere zweidimensionale Markierung, die beispielsweise in der Photogrammetrie eingesetzt werden kann, die sich dadurch auszeichnet, daß die Markierung einen Zentralkreis oder -kreisring sowie mindestens einen umgebenden, in radiale Sektoren eingeteilten Codekreisring aufweisen.

Die JP A 10185563 und die JP A 11160069 beschreiben zweidimensionale Referenzelemente für die Photogrammetrie. Die Referenzelemente haben eine triangulare Form und je drei Referenzpunkte.

Aus der DE-A-195 36 295 ist eine räumlich gestaltete Signalmarke, die eine Anordnung von mehreren ebenen Signalmarken darstellt, bekannt geworden. Die einzelnen Signalmarken weisen ein Merkmal definierter geometrischer Gestalt auf, wobei die ebenen Signalmarken auf mehreren benachbarten, zueinander geneigten Flächen aufgebracht sind, derart, dass aus jeder Raumrichtung mindestens eine Signalmarke nahezu senkrecht oder aus einem steilen Winkel beobachtbar ist.

Nachteilig an allen zuvor beschriebenen Verfahren, die zweidimensional ausgedehnten Referenzelementen verwenden ist, daß sie nur für photogrammetrische Zwecke geeignet sind, solange die Perspektive der Meßbilder keine gravierenden Unterschiede aufweist, anzusprechende Meßbilder im Halbraum über der Meßmarkenebene liegen und die perspektivischen Verzerrungen durch die zentralprojektive Abbildung noch eine Definition des Markenzentrums erlauben.

Aufgabe der Erfindung ist es, ein Verfahren anzugeben, das die Zuordnung von Referenzelementen auf einem Objekt auch dann erlaubt, wenn die Meßbilder unter stark unterschiedlichen Perspektiven aufgenommen sind, wobei nicht mehr ein einzelner Objektpunkt als Zielmarke dienen soll.

Gelöst wird diese Aufgabe durch ein Verfahren zur Bestimmung der Lage von Meßbildern eines Objektes relativ zum Objekt gemäß Anspruch 1. Gemäß der Erfindung werden räumliche Referenzelemente, sogenannte 3D-Targets, in digitalen Meßbildern erkannt und lokalisiert. Diese Targets werden nach ihrer Identifikation und Lokalisierung in den beteiligten Bildern sowohl zur Orientierung dieser Meßbilder als auch zur präzisen Vermessung des Objektes eingesetzt. Der besondere Vorteil derartiger Targets ist darin zu sehen, daß man damit die Freiheit erhält, durch Verwendung von beliebig vielen dieser Targets, die beliebig angeordnet werden können, beliebig viele Aufnahmen miteinander verknüpfen und das Objekt von allen Seiten zuverlässig erfassen zu können.

Eingesetzt werden kann das erfindungsgemäße Verfahren beispielsweise in digitalen photogrammetrischen Präzisionsmeßverfahren. In diesem Feld wird die Leistungsfähigkeit dieser Meßtechnik deutlich gesteigert. Werden beispielsweise kubische Targets in Meßbildern erkannt und lokalisiert, so können damit die Vorteile rechnergestützter, photogrammetrischer Meßtechniken auf neue Aufgabenstellungen ausgedehnt werden. Als Anwendungsgebiete seien die Industriemeßtechnik und der Anlagenbau genannt. Die Einsatzmöglichkeiten erstrecken sich von der unbeschränkten Orientierbarkeit photogrammetrischer Meßbilder über die allseitige Vermessung industrieller Objekte mit Hilfe kubischer Targets bis hin zur Extraktion kubisch gestalteter Oberflächenbestandteile.

Weiterbildung der Erfindung sind Gegenstand der Unteransprüche.

Neben dem Verfahren, das eine Zuordnung der Lage von Meßbildern des Objektes relativ zum Objekt erlaubt, stellt die Erfindung auch ein Verfahren zum photogrammetrischen Vermessen von Objekten auf der Basis von metrischen Meßbildern sowie eine Vorrichtung zum Vermessen eines Objektes zur Verfügung.

Die Vorteile des Verfahrens, bei dem der dreidimensionale Charakter der Referenzelemente genutzt wird, ist darin zu sehen, dass pro Referenzelement nicht nur ein Zielstrahl, sondern mehrere Zielstrahlen eingesetzt werden. Die Verwendung mehrer Zielstrahlen hat den Vorteil, dass am Objekt selber zur Vermessung desselben weniger Elemente als bislang benötigt werden. Das bedeutet, dass der Aufwand am Objekt geringer ist.

Des weiteren lassen sich zwischen den Strahlen eines Elementes Prüfbedingungen formulieren. Diese Prüfbedingungen erlauben die gegenseitige Kontrolle der Bildstrahlen und vereinfachen die Ermittlung von Mängeln in der Bildgeometrie. Beides steigert die Robustheit des Messverfahrens gegenüber unentdeckt bleibenden fehlerhaften Bildstrahlen und die erreichbare Qualität des Gesamtergebnisses.

Weiterhin kann gemäß dem erfindungsgemäßen Verfahren die Geometrie des Elementes selbst genutzt werden. Bei bekannter Geometrie können Kontrollbedingungen hinsichtlich der Geometrie formuliert werden. Diese Kontrollbedingungen, die auf den Aufbau der kubischen Verknüpfungselemente selbst zurückgehen, gestatten eine wesentlich einfachere Überprüfung der Orientierungsberechnungen. Definitionsgemäß muß die aus den Berechnungen ermittelte Gestalt der Verknüpfungselemente mit der realen und bekannten Figur exakt übereinstimmen. Sofern dies nicht zutrifft, liegen Berechnungsfehler vor, die somit automatisch erkannt werden können. Daraus resultiert eine deutlich höhere Robustheit des Berechnungsverfahrens als es herkömmliche, ohne diese Geometrieinformation arbeitende Verfahren besitzen.

Die Erfindung soll nachfolgend beispielhaft anhand der Figuren beschrieben werden.

Es zeigen:
- Figur 1: schematische Darstellung eines zu vermessenden Objektes mit 3D-Targetelementen
- Figur 2a: schematische Darstellung eines zu vermessenden Objektes mit 2D-Targetteilen
- Figur 2b: schematische Darstellung eines zu vermessenden Objektes gemäß Figur 2a mit 3D-Targetteilen
- Figur 3a: s/w-Meßbild
- Figur 3b: extrahierte Kanten des Meßbildes gemäß Figur 3a
- Figur 4: Ablaufschema zur Identifizierung und Lokalisierung von Meßobjekten
- Figur 5: Ablaufschema zur Verbindung der Meßbilder mit Hilfe der identifizierten und lokalisierten Targetobjekte.

Das erfindungsgemäße Verfahren zur Bestimmung der Lage von Meßbildern eines Objektes relativ zum Objekt zeichnet sich dadurch aus, daß räumliche Referenzelemente, sogenannte 3D-Targets in digitalen Meßbildern erkannt und lokalisiert werden. Diese Targets werden nach ihrer Identifikation und Lokalisierung in den beteiligten Bildern sowohl zur Orientierung dieser Meßbilder als auch im Falle des Vorliegens von mindestens zwei Meßbildern zur präzisen Vermessung des Objektes eingesetzt. Besonders vorteilhaft ist es, wenn die dreidimensionale Form des Targets eindeutig identifizierbar ist. Derartige eindeutig identifizierbare Targets sind beispielsweise Würfel.

Die Orientierung gründet sich auf der Zuordnung der in den verschiedenen Bildern gefundenen Targets unter Verwendung von deren Bildposition. Dabei unterscheidet man zwischen Orientierungen der Bilder untereinander und der in bezug auf ein vorgegebenes Raumkoordinatensystem formulierten. In letztgenanntem Fall ist vorauszusetzen, daß einige Targets mit ihren Koordinaten im Raum bekannt sind.

Im Falle der präzisen Vermessung des Objektes dienen die Positionen der Targets zur Festlegung von Richtungsstrahlen, die im Verbund aller Bilder zur bestmöglichen Bestimmung der Raumpositionen der Targets benutzt werden. Hierbei ist vorzugeben, daß die Targets in einer Weise am Objekt angeordnet werden, daß aus ihren Positionen die gewünschten geometrischen Aussagen zum Objekt abgeleitet werden können.

Die Erfindung unterscheidet sich dadurch von allen anderen bisher in der photogrammetrischen Praxis eingesetzten Verfahren, daß nicht ebene Paßflächen zur Festlegung von Paß- bzw. Verknüpfungspunkten dienen, sondern räumliche Paßkörper zum Einsatz kommen, mit deren Hilfe die Orientierung und Vermessung vorgenommen wird.

Damit wird es erstmals möglich, die bildgestützte, d.h. photogrammetrische Vermessung auch dann einzusetzen, wenn die Objekte unter stark unterschiedlichen Perspektiven aufgenommen wurden. Aber auch die Vermessung voluminöser Objekte wird vereinfacht, weil die hierbei aufzunehmenden Bildverbände bestmöglich verknüpft werden können.

Ein weiterer Vorteil der 3D-Targets ist, daß Identifikationsprobleme verringert werden, da nicht mehr ein einzelner Objektpunkt als Zielmarke dient, sondern das gesamte Volumen. Daraus resultiert eine größere Robustheit des Meßverfahrens und ein breiteres Anwendungsspektrum.

Dazu gehört auch, daß ein einzelnes Meßbild alleine mit nur einem gefundenen Target orientiert werden kann und nicht, wie in im Falle ebener Targets, mindestens drei gefunden werden müssen.

Außerdem wird der gesamte Messungsvorgang erheblich beschleunigt, gegen Störungen und Meßfehler unanfälliger und damit wirtschaftlicher gemacht.

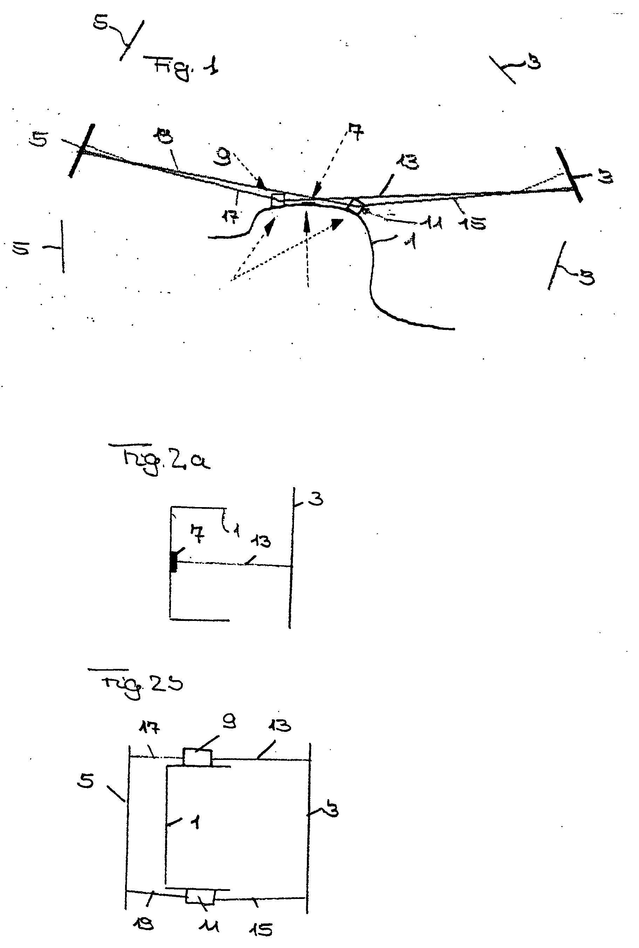

Der Vorteil der Verwendung von 3D-Targets ist aus Figur 1 ersichtlich. In Figur 1 ist ein zu vermessender Körper 1 gezeigt sowie zwei Positionen 3, 5 zur Aufnahme von Meßbildern. Auf dem zu vermessenden Körper ist ein zweidimensionales Referenzelement 7 angeordnet, gemäß dem Stand der Technik, sowie zwei erfindungsgemäße dreidimensionale Referenzelemente 9, 11 bzw. Referenzkörper.

Während das zweidimensionale Referenzelement 7 keine Verknüpfung der an den Positionen 3, 5 aufgenommenen Meßbildern erlaubt und damit die Ermittlung der Lage der Meßbilder relativ zum zu vermessenden Objekt, ist dies bei Einsatz von 3D-Targets gemäß der Erfindung möglich. In Figur 1 deutlich zu erkennen sind die Referenzstrahlen 13, 15 vom Meßbild an Position 3 zu den 3D-Targets 9, 11 sowie die Referenzstrahlen 17, 19 vom Meßbild an Position 5 zu den 3D-Targets 9, 11.

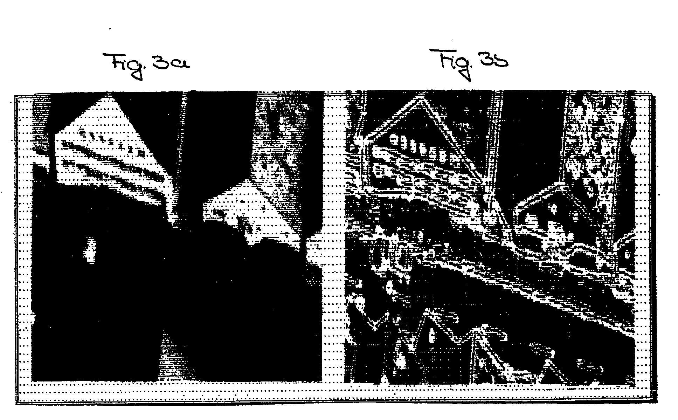

Besonders deutlich wird die Leistungsfähigkeit des erfindungsgemäßen Verfahrens bei Vermessen eines Objektes wie in den Figuren 2a und 2b gezeigt, beispielsweise eines Armaturenbrettes.
So ist bei Verwendung von zweidimensionalen Referenzelementen 7 wie in Figur 2a gezeigt ein allseitiges Vermessen des Objektes 1 aufgrund fehlender Sichtbarkeit von Targets 7 in Meßbildern von 5 nicht möglich.

Bei Verwendung der erfindungsgemäßen dreidimensionalen Körper 9, 11 wie in Figur 2b gezeigt ist hingegen eine Vermessung des Objektes 1 möglich, da eine Verknüpfung von Meßbildern an der Position 3, die die Rückseite des Gegenstandes 1 markiert, mit Meßbildern an der Position 5, die die Vorderseite des Gegenstandes markiert, möglich ist.

Wie aus den vorangegangenen Figuren und deren Beschreibung hervorgeht, besteht ein wesentlicher Vorteil der Erfindung in der räumlichen Ausdehnung und der damit verbundenen Sichtbarkeit auch aus den unterschiedlichsten Betrachtungswinkeln. Außerdem liefern die exakt bekannte geometrische Form und Größe der Targets weitere wichtige Informationen für die Orientierung. Dies ist für ebene Körper nicht gewährleistet.

Bei dreidimensionalen Referenzelementen kann das nicht sichtbare geometrische Zentrum des Körpers ebenso als Bezugspunkt für Zielstrahlen verwendet werden, wie die sichtbaren Eckpunkte.. Angesichts der perspektivisch verzerrenden Wirkung der den Bildern zugrundeliegenden Zentralprojektion, wie auch der wechselnden Ansichten auf die verschiedenen Targetseiten muß ein Target immer in seiner vollständigen geometrischen Form verwendet werden werden. Dazu ist es erforderlich, die Strukturelemente wie zum Beispiel Ecken und Kanten anzusprechen und zu registrieren.

Eine Kantenextraktion basierend beispielsweise auf einer Grauwertanalyse von Meßbildem zeigen die Figuren 3a und 3b anhand baulicher Objekte. Figur 3a zeigt das Meßbild des Objektes, Figur 3b die hieraus extrahierten Grauwertkanten.

Der Vorteil einer Kantenextraktion besteht in der häufig zu findenden Übereinstimmung zu entsprechenden morphologischen Objektbestandteilen und dem damit verbundenen Informationsgehalt zum Objekt. So lassen sich damit Objekte gegeneinander abgrenzen oder aber bestimmte geometrische Elemente wie zum Beispiel Raumkanten lokalisieren.

In einem weiteren Verfahrensschritt werden Objektbestandteile zu Objekten zusammengefaßt, um auf diesem Weg objektspezifischer von nichtspezifischer Information trennen zu können. Das Zusammenfügen von einzelnen Elementen wird beispielsweise über Nachbarschaftsanalysen gesteuert, wobei implizit auch schon geometrisches Wissen, zum Beispiel Parallelität von Linien etc., über die Form der zu lokalisierenden Objekte vorausgesetzt wird.

Nachfolgend sollen nochmals die wesentlichen Schritte des erfindungsgemäßen Verfahrens wiedergegeben werden.

Aus den digitalen Meßbildern oder digitalisierten, analogen Meßbildern werden die 3D-Targets innerhalb eines einzelnen Meßbildes identifiziert, lokalisiert und von allen anderen Bildinhalten, unabhängig von jeglichen äußeren Faktoren wie Umgebung, Kameratyp, Maßstab, Beleuchtung etc., abgegrenzt. Sodann werden automatisch Korrespondenzen zwischen Meßbildern unter Verwendung der gefundenen Targets und von deren gegenseitiger Zuordnung bestimmt. Hierbei sind keinerlei Einschränkungen hinsichtlich der zulässigen Betrachtungsunterschiede zwischen den Meßbildern vorgesehen. Abschließend werden unter Verwendung aller Raumstrahlen der zugeordneten Targets aller Meßbilder die Orientierungen der Bilder und der Raumkoordinaten der Targets präzise bestimmt.

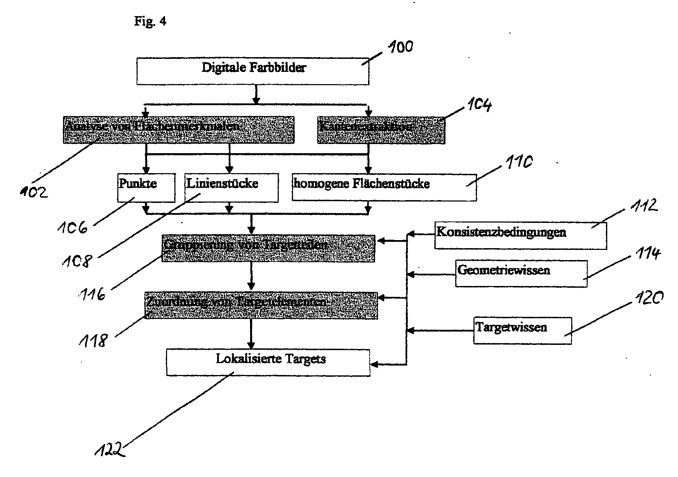

Die einzelnen Schritte des Identifizierens und Lokalisierens sind schematisch in Figur 4 angegeben. Die einzelnen Verarbeitungsbestandteile verwenden Ansätze aus der Bildverarbeitung, Bildanalyse und Photogrammetrie und gestatten, im Bildmaterial genau die gesuchten Targetobjekte zu identifizieren und zu lokalisieren.

Zunächst werden die digitalen Farbbilder in Schritt 100 in eine Rechnereinrichtung eingelesen. Sodann werden die digitalen Farbbilder in Schritt 102 auf Flächenmerkmale hin analysiert. Gleichzeitig findet beispielsweise mit Hilfe einer Grauwertanalyse in Schritt 104 eine Kantenextraktion statt. Durch die Analyse der Flächenmerkmale und die Kantenextraktion können beispielsweise Punkte 106, Linienstücke 108 sowie homogene Flächenstücke 110 identifiziert und extrahiert werden.

Die Verwendung von digitalen Farbildern gemäß Schritt 100 ist in der Photogrammetrie auf dem Gebiet der topographischen Anwendungen bekannt. Ziel des Einsatzes von Farbe ist die Erhöhung des Angebots an visueller Information, wodurch manuelle Interpretationsprozesse einfacher, sicherer und leistungsfähiger werden. In anderen Anwendungsgebieten, insbesondere in der Industriemeßtechnik, sind Farbbilder bisher unüblich.

Flächenmerkmale beschreiben charakteristische, aus bildbezogenen Berechnungen abgeleitete Größen, die die betroffene Bildregion kennzeichnen und gegebenenfalls von anderen Regionen abgrenzen lassen. Merkmale werden oft verwendet, um Bildinhalte nach bestimmten Kriterien einzuteilen. Von besonderer Bedeutung für die Qualität einer Einteilung ist der Bildinhalt und seine Aussagekraft sowie die Berechnungsmethodik.
Kanten beschreiben die Ränder von Bildbereichen, die als einheitlich, d.h. von geringen inhaltlichen Änderungen geprägt, zu betrachten sind. Man erhält solche Kanten über Berechnungen in bezug auf den Bildinhalt. Hier gibt es eine Vielzahl von verschiedenen Rechenverfahren, deren Leistungsfähigkeit vom Zusammenspiel zwischen Bildinhalt und den gewählten mathematischen Methoden abhängt.

Punkte beschreiben Bildorte, die sich von anderen Orten unterscheiden lassen. Das können Schnittpunkte von extrahierten Kanten sein oder auch mit eigenen Berechnungsoperationen entdeckte Stellen im Bild. Sie spielen für den Meßprozeß eine wichtige Rolle, weil sie zur Festlegung von Projektionsstrahlen genutzt werden können. Art, Qualität und Aussage der Punkte hängen stark vom Weg der Ermittlung und vom Bildinhalt ab.

Linien setzen sich aus Kanten zusammen. Sie werden aus der Menge der ermittelten Kanten nach wiederum zu definierenden Kriterien abgeleitet.

Homogene Flächenstücke beschreiben Bildbereiche, die in bezug auf festgelegte Kriterien als einheitlich zu betrachten sind. Man erhält auch sie über Berechnungen in bezug auf den Bildinhalt. Ihr Nutzen besteht in der damit verbundenen Einteilung des Bildes.

Die extrahierten Merkmale werden dazu benützt, mit Hilfe von Konsistenzbedingungen 112, sowie Geometriewissen 114, Targetteile in einem Verfahrensschritt 116 zu gruppieren und in einem weiteren Verfahrensschritt 118 bestimmten Targetteilen zuzuordnen. Unter Zugrundelegung von Targetwissen 120 ist es möglich, Targets in einem weiteren Schritt 122 zu lokalisieren.

Unter Konsistenzbedingungen versteht man solche Bedingungen, die dazu genutzt werden, die gefundenen geometrischen Informationen, beispielsweise Punkte, Kanten, Linien, etc. auf Widerspruchsfreiheit zu überprüfen. Diese Bedingungen stellen mathematische Formulierungen dar, die im Bild oder auch im Objektraum sein können.

Unter Geometriewissen wird solches Wissen verstanden, das sich aus den Kenntnissen des Abbildungsvorgangs unnd aus dem geometrischen Zusammenspiel von Dingen des Objektraums und deren Projektion in Meßbilder ergibt.

Beim Targetwissen wird ebenfalls wieder auf photogrammetrische Standardverfahren zurückgegriffen.
Voraussetzungen dafür, daß einzelne 3D-Targets identifiziert bzw. lokalisiert werden können, ist ein einfacher, klar definierter und bekannter geometrischer Aufbau, eine eindeutige, unverwechselbare Gestaltung jeder einzelnen Targetfläche sowie eine ausreichende Größe, der 3D-Targets um in den Bildern eine für die Erkennung ausreichend große Fläche abzudecken.

Die zuvor beschriebene Identifizierung und Isolierung schaffen die Voraussetzung für die sich anschließende Verbindung der Meßbilder mit Hilfe der entdeckten Targetobjekte.
Die einzelnen Schritte der Bildverarbeitung, beispielsweise die Identifizierung und Extrahierung von Kanten sind in nachfolgenden Publikationen:
- J.F. Canny: A computational approach to edge detection, IEEE Tansactions on Pattem Analysis an Machine Intelligence, Vol. 8, No. 6, 1986
- Duda, Hart: Pattern Classification an Scene Analysis, Wiley and Sons, New York, 1973
- Institute for Robotics and Intelligent Systems, University of Southern California: Annotated Computer Vision Bibliography, 1999
- Paulus, Hornegger: Pattern Recognition of Images and Speech, Vieweg, 1997,
deren Offenbarungsgehalt vollumfänglich in die vorliegende Anmeldung mitaufgenommen wird, beschrieben.

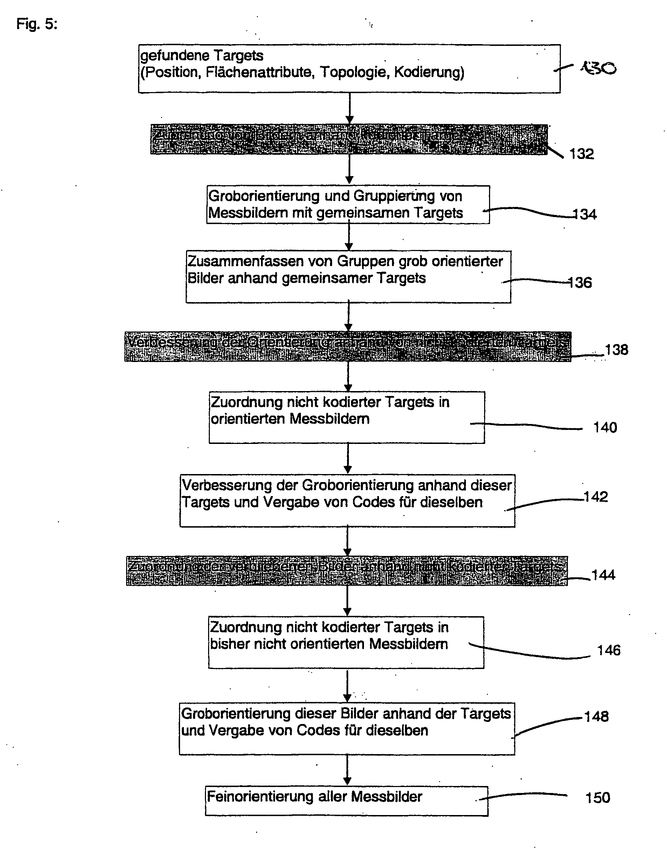

Die Verfahrensschritte für die Verbindung der Meßbilder mit Hilfe der entdeckten Targetobjektive sind in Figur 5 zusammengefaßt.

Die gemäß dem in Figur 4 beschriebenen Verfahren gefundenen Targets 130 werden für die Bestimmung der Bildorientierungen und der Objektkoordinaten eingesetzt. Dazu werden zunächst im Schritt 132 die codierten Targets zur Ermittlung einer Groborientierung von jenen Meßbildern eingesetzt, die mindestens ein codiertes Target enthalten. Dies geschieht zunächst in Bildgruppen 134, die anschließend in Schritt 136 zusammengefasst werden.

Es folgt die Verbesserung der Ergebnisse durch Hinzunahme weiterer, nicht codierter Targets in den bereits grob orientierten Bildern in Schritt 138. Dies wird durch Klärung der Zuordnung der Abbildungen der nicht codierten Targets in Schritt 140 erreicht. Damit kann anschließend auch diesen Targets in Schritt 142 ein Code vergeben werden, der sie eindeutig identifizierbar macht.

Abschließend werden noch jene Bilder in Schritt 144 einbezogen, die keinerlei codierte Targets aufweisen. Hier kommt ein weiteres Zuordnungsverfahren in Schritt 146 zum Einsatz, mit dessen Hilfe diese Bilder grob orientiert, die Targets identifiziert und mit einem Code in Schritt 148 versehen werden. Der letzte Schritt besteht in einer simultanen Orientierung aller beteiligten Meßbilder, die auch die präzisen räumlichen Koordinaten der Targets liefert.

Die Bilder, in denen codierte Targets abgebildet sind, stellen eine Untermenge aller Bilder dar. Für die Zuordnung von Bildern ohne numerierte Inhalte existieren bereits Verfahren, die im allgemeinan aber nur für die Bildung von Bildpaaren benutzt werden. Für das Verfahren sind Bildpaare aber eine Ausnahme. Die üblicherweise viel größere Anzahl von Messbildern erhöht die Zahl der möglichen und zu bildenden Kombinationen von noch nicht orientierten Bildern erheblich.

Die wesentlichen Verbesserungen der Erfindung gegenüber dem Stand der Technik werden in allen Schritten betreffend die Zuordnung nicht codierter Targets in nicht orientierten Meßbildern erzielt. In diesem Schritt werden photogrammetrische Berechnungsmethoden eingesetzt. Das Problem wird durch die vorhandene dreidimensonale Information über den Aufbau der Targets wesentlich einfacher und sicherer gestaltet.

Der Groborientierung der Bilder gemäß Schritt 134 und 148 liegen photogrammetrische Standardverfahren zugrunde. Bei der Feinorientierung aller Meßbilder werden typische photogrammetrische Orientierungsverfahren eingesetzt.

Betreffend die einzelnen Schritte der Bildzuordnung gemäß Figur 5 wird auf die nachfolgenden Schriften verwiesen:
- G. Vosselman: Relational Matching, Springer-Verlag, Berlin, 1992
- Institute for Robotics and Intelligent Systems, University of Southern California: Annotated Computer Vision Bibliography, 1999,
deren Offenfbarungsgehalt vollumfänglich in die vorliegende Anmeldung mit aufgenommen wird.

Als dreidimensionale Targets finden beispielsweise Targets in Würfelform Verwendung, wobei jede Seite des Würfels mit Hilfe von Farben mit fester Abfolge eindeutig gekennzeichnet ist. Als Farbabfolge kann beispielsweise Rot, Grün, Blau, Gelb, Magenta, Zyan festgelegt werden. Die Größe der Würfel wird durch die Kantenlänge von ungefähr 5 bis 30 cm bestimmt. Neben der Farbgestaltung kann diesen Targets ein Code aufgeprägt sein, der sie unverwechselbar macht. Dies kann über ein Intensitätsmuster erfolgen. Die zuvor beschriebenen dreidimensionalen Targets bzw. Referenzelemente sind nur als beispielhaft anzusehen, selbstverständlich sind auch andere Geometrien oder Topologien, d. h. Kennzeichnung der einzelnen Seiten eines dreidimensionalen Objektes, zur Identifizierung denkbar.

Mit der Erfindung wird erstmals auch eine Vorrichtung zur Vermessung eines Objektes angegeben, die Mittel zum Anbringen der dreidimensionalen Referenzelemente am zu vermessenden Objekt umfasst sowie Mittel zum Aufnehmen eines Messbildes des Objektes oder mehrerer Messbilder aus unterschiedlichen Perspektiven sowie Mittel zum Bestimmen der Lage der Messbilder relativ zum Objekt und Mittel zum Vermessen des Objektes anhand der Position der dreidimensionalen Referenzelemente. Bevorzugt sind die dreidimensionalen
Referenzelemente, wie zuvor beschrieben, Referenzelemente, bei denen die einzelnen Seiten des dreidimensionalen Objektes zur Identifizierung gekennzeichnet sind. Dies wäre beispielsweise über verschiedene Farben möglich oder auch dadurch, dass die unterschiedlichen Flächen Licht unterschiedlicher Wellenlänge emittieren. Auf das jeweilige Targetmerkmal abgestimmt, sind die Mittel zum Aufnehmen des Messbildes bzw. der Messbilder. So ist bei Seitenflächen mit unterschiedlichen Farben beispielsweise als Aufnahmemittel eine Farbkamera geeignet. Bei eindeutigen Texturmerkmalen der unterschiedlichen Seiten des Targets kann beispielsweise mit einer schwarz-weiß-Kamera gearbeitet werden. Die Mittel zum Bestimmen der Lage und Vermessen des Objektes sind in der Regel Mikrocomputer, die es mit entsprechender Software erlauben, die aufgenommenen Daten der geometrisch beschriebenen Körper auszuwerten. Wesentlich für die zur Bestimmung der Lage der einzelnen Referenzelemente und zur Vermessung des Objektes ist, dass die Gestaltung der dreidimensionalen Referenzelemente bei der Verarbeitung der Daten mit einfließt.

Mit Hilfe der Erfindung können neue Anwendungsfelder für den Einsatz digital photogrammetrischer Präzisionsmeßverfahren erschlossen und die Leistungsfähigkeit dieser Meßtechnik gesteigert werden. Besonders vorteilhaft ist es, wenn die mit vorhandenen digital-photogrammetrischen Programmsystemen gegebenen Möglichkeiten auf die automatische Erkennbarkeit von 3D-Targets ausgedehnt wird und damit die Vorteile rechnergestützter Meßtechniken auf neue Aufgabenstellungen ausgedehnt werden. Ein Anwendungsgebiet ist beispielsweise die Industriemeßtechnik.

Die Einsatzmöglichkeiten der Erfindung erstrecken sich von der unbeschränkten Orientierbarkeit photogrammetrischer Meßbilder über die allseitige Vermessung beliebiger Objekte mit Hilfe kubischer Targets bis hin zur Extraktion kubisch gestalteter Oberflächenbestandteile.

## Patentansprüche

1. Verfahren zur Bestimmung der Lage von Meßbildern eines Objektes relativ zum Objekt, umfassend folgende Schritte:
1.1 es werden in einem oder mehreren, von unterschiedlichen Positionen (3, 5) aufgenommenen Meßbildern am Objekt angebrachte dreidimensionale Referenzelement anhand ihrer Flächenmerkmale und/oder mit Hilfe einer Kantenextraktion identifiziert und gegenüber anderen Bildinhalten abgegrenzt;
1.2 mit Hilfe von Geometriewissen und/oder Konsistenzbedingungen werden Teile der dreidimensionalen Referenzelement (9, 11) gruppiert und bestimmten Teilen des dreidimensionalen Referenzelementes zugeordnet;
1.3 die dreidimensionalen Referenzelemente werden am Objekt (1) lokalisiert;
1.4 unter Verwendung der idenfizierten und lokalisierten Referenzelementes (9, 11) wird die Lage des Meßbildes bzw. der Meßbilder relativ zum Objekt (1) bestimmt.

2. Verfahren nach Anspruch 1, **dadurch gekennzeichnet, daß**
die Referenzelemente (9, 11) Würfelform haben.

3. Verfahren nach Anspruch 1 oder 2, **dadurch gekennzeichnet, daß**
die dreidimensionalen Referenzelemente (9, 11) Identifizierungsmittel zur Festlegung der Ausrichtung des Referenzelementes im Raum umfassen.

4. Verfahren nach Anspruch 3, **dadurch gekennzeichnet, daß**
die Identizifierungsmittel eindeutige und gut unterscheidbare Merkmale aufweisen.

5. Verfahren nach Anspruch 4, **dadurch gekennzeichnet, daß**
die eindeutig und gut unterscheidbaren Merkmale Farben oder Texturen sind.

6. Verfahren zum photogrammetrischen Vermessen von Objekten auf der Basis von metrischen Meßbildern, umfassend die Schritte:
6.1 Anbringen von Referenzelementen (9, 11) am Objekt, wobei die Referenzelemente dreidimensionale Referenzelement (9, 11) sind;
6.2 Aufnehmen von einem Meßbild des Objektes oder mehreren Meßbildern des Objektes aus unterschiedlichen Positionen (3, 5);
6.3 Ermitteln der Lage des Meßbildes bzw. der Meßbilder relativ zum Objekt (1) unter Verwendung eines Verfahrens nach einem der Ansprüche 1 bis 5;
6.4 Vermessen des Objektes (1) anhand der Position der Referenzelemente (9, 11) in dem bzw. den Meßbilder(n), wobei aus deren Positionen die Geometrie des Objektes abgeleitet wird.

7. Vorrichtung zur Vermessung eines Objektes mit
7.1 Mitteln zum Anbringen dreidimensionaler Referenzelemente (9,11) am zu vermessenden Objekt (1)
7.2 Mittel zum Aufnehmen eines Messbildes des Objektes oder mehrerer Messbilder des Objektes (1) aus unterschiedlichen Perspektiven
7.3 Mittel zum Bestimmen der Lage der Messbilder relativ zum Objekt
7.4 Mittel zum Vermessen des Objektes anhand der Position der dreidimensionalen Referenzelemente (9.11) in dem bzw. den Messbild(ern)

8. Vorrichtung nach Anspruch 7, **dadurch gekennzeichnet, dass** die Mittel zum Aufnehmen der Messbilder auf die Merkmale der dreidimensionalen Objekte abgestimmt sind.

9. Vorrichtung nach Anspruch 7 oder 8, **dadurch gekennzeichnet, dass** die dreidimensionalen Referenzelemente aktive Elemente die lichtemittierende Flächen einfassen und die Mittel zum Aufnehmen, Mittel zum Identifizieren der lichtemittierenden Flächen.
